# FASCICULE DE BREVET EUROPEEN

(11) **EP 2 746 118 B1**
(45) Date de publication et mention de la délivrance du brevet: **16.05.2018**
(21) Numéro de dépôt: 13196124.5
(22) Date de dépôt: 06.12.2013
(51) Int. Cl.: B60T 7/04, B60T 8/17, B60T 8/172, B60T 8/32, B64C 25/42, B60T 17/22, B64C 25/44, B64C 25/46

(54) **Procédé de gestion du freinage d'un aéronef**
Bremssteuerungsverfahren eines Luftfahrzeugs
Method for managing the braking of an aircraft

(30) Priorité: 21.12.2012 FR 1262715
(43) Date de publication de la demande: 25.06.2014
(73) Titulaire: Safran Landing Systems, 78140 Vélizy-Villacoublay (FR)
(72) Inventeur: Vaney, Jean-Baptiste, 78140 Vélizy-Villacoublay (FR); Frank, David, 78140 Vélizy-Villacoublay (FR); Lemay, David, 78140 Vélizy-Villacoublay (FR)
(74) Mandataire: Parzy, Benjamin Alain

(56) Documents cités:
- EP-A1- 0 329 373
- EP-A1- 0 498 714
- EP-A1- 0 610 115
- EP-A1- 1 588 912
- WO-A1-94/20344
- WO-A1-2010/088396
- WO-A2-01/15948
- US-A1- 2005 040 286
- US-A1- 2008 154 470
- US-A1- 2009 276 133
- US-A1- 2011 226 569

## Description

L'invention concerne un procédé de gestion du freinage à basse vitesse d'un aéronef permettant d'améliorer le confort des passagers et de limiter l'usure des freins.

Des procédés de gestion de ce type sont connues par exemple par les documents EP 0 498 714 A1, US 2009/276133 A1, WO 01/15948 A2 ou EP 0 329 373 A1.

### ARRIERE PLAN DE L'INVENTION

La gestion du freinage d'un aéronef lors du roulage au sol à basse vitesse, c'est-à-dire en dehors des phases de décollage et d'atterrissage, doit prendre en compte certaines contraintes, parmi lesquelles le confort des passagers.

Pour améliorer le confort des passagers, on cherche à mettre en oeuvre un freinage qui soit à la fois progressif et précis. Un freinage progressif permet d'éviter que les passagers ne ressentent de trop brusques décélérations. Un freinage précis à basse vitesse est important pour le confort, car il permet d'éviter que le pilote ne soit tenté d'intervenir de manière répétée sur les pédales, par exemple lorsqu'il manoeuvre l'aéronef en suivant les consignes d'un agent de piste et qu'il est confronté à une poussée moteur résiduelle. L'état de la technique est notamment illustré par le document FR2701006, qui décrit un procédé de pilotage d'un dispositif de freinage électro-hydraulique d'un train de roues d'aéronef. Le procédé consiste, lorsque l'aéronef roule à faible vitesse, à organiser séparément le freinage pour les roues d'un premier et d'un deuxième groupe de roues freinées distinctes, avec une loi de variation de la pression commandée en fonction de l'enfoncement des pédales de frein qui est propre à chaque groupe de roues. Une première loi intervient sur toute la plage active d'enfoncement des pédales de frein, tandis qu'une seconde loi n'intervient qu'à partir d'un certain seuil d'enfoncement prédéterminé desdites pédales. On commande donc un nombre de freins croissant en fonction du niveau de freinage commandé, ce qui permet d'assurer un freinage progressif, précis, et donc confortable.

Ce procédé présente un certain nombre d'inconvénients. Dans le cas où un frein est indisponible, par exemple lorsque l'un des équipements impliqués dans la commande de ce frein est défaillant, l'efficacité du freinage résultant des freins restants est très nettement diminuée. De plus, dans le cas où un ou plusieurs freins présentent une température ou une usure significativement supérieure ou inférieure à celle des autres freins, ou bien une usure plus importante, le procédé ne permet pas de diminuer cette différence de température ou d'usure.

### OBJET DE L'INVENTION

L'invention a pour objet un procédé semblable à celui décrit plus tôt, mais ne présentant pas les inconvénients précités.

### RESUME DE L'INVENTION

En vue de la réalisation de ce but, on propose un procédé de gestion du freinage d'un aéronef comportant une pluralité de roues équipées chacune d'un frein adapté à générer un effort de freinage en réponse à un enfoncement de pédales de frein, le procédé de gestion comprenant les étapes de :
- répartir les roues équipées d'un frein en au moins deux groupes distincts ;
- affecter à chaque groupe de roues des lois de freinage respectives de variation de l'effort de freinage en fonction de l'enfoncement des pédales de frein ;
- permuter à intervalles prédéterminés l'affectation des lois aux groupes selon une loi de permutation prédéfinie.

Selon l'invention, le procédé comporte en outre l'étape de modifier la loi de permutation en réponse à la survenue d'un évènement prédéterminé.

Ainsi, lorsque survient un évènement prédéterminé impactant des performances de l'aéronef, et notamment l'efficacité du freinage, on peut modifier la loi de permutation de manière à réduire les effets de cet évènement prédéterminé.

On propose de plus un procédé de gestion du freinage semblable à celui décrit plus tôt, dans lequel l'évènement prédéterminé est la détection sur au moins une roue:
- de l'indisponibilité du frein de la roue, ou
- d'une température du frein particulièrement élevée ou basse par rapport aux températures d'autres freins, ou
- d'une usure du frein particulièrement importante ou faible par rapport aux usures d'autres freins, ou
- d'une température d'un pneumatique particulièrement élevée ou basse par rapport aux températures d'autres pneumatiques, ou
- d'une pression du pneumatique particulièrement élevée ou basse par rapport aux pressions d'autres pneumatiques.

On peut donc modifier la loi de permutation de manière à diminuer l'effet de l'indisponibilité d'un frein, ou pour réduire des différences de température ou d'usure entre des freins. Ainsi, lorsqu'un certain frein est indisponible ou trop chaud ou trop usé, on met en oeuvre une nouvelle loi de permutation dans laquelle une loi de freinage sollicitant peu les freins est affectée pendant un certain nombre d'intervalles prédéterminés au groupe comportant la roue munie de ce frein.

En réduisant la sollicitation de ce frein, on réduit soit l'impact de son indisponibilité, soit la différence de température ou d'usure existant entre ce frein et les autres.

### BREVE DESCRIPTION DES DESSINS

L'invention sera mieux comprise à la lumière de la description qui suit en référence aux figures des dessins annexés parmi lesquelles :
- la figure 1 est une vue schématique des roues de deux atterrisseurs principaux d'un aéronef dans lequel est mis en oeuvre le procédé de gestion du freinage de l'invention ;
- la figure 2 illustre trois lois différentes de variation de pression commandée en fonction de l'enfoncement des pédales de frein, les lois étant affectées à des groupes de roues dans lesquels sont réparties les roues de l'aéronef.

### DESCRIPTION DETAILLEE DE L'INVENTION

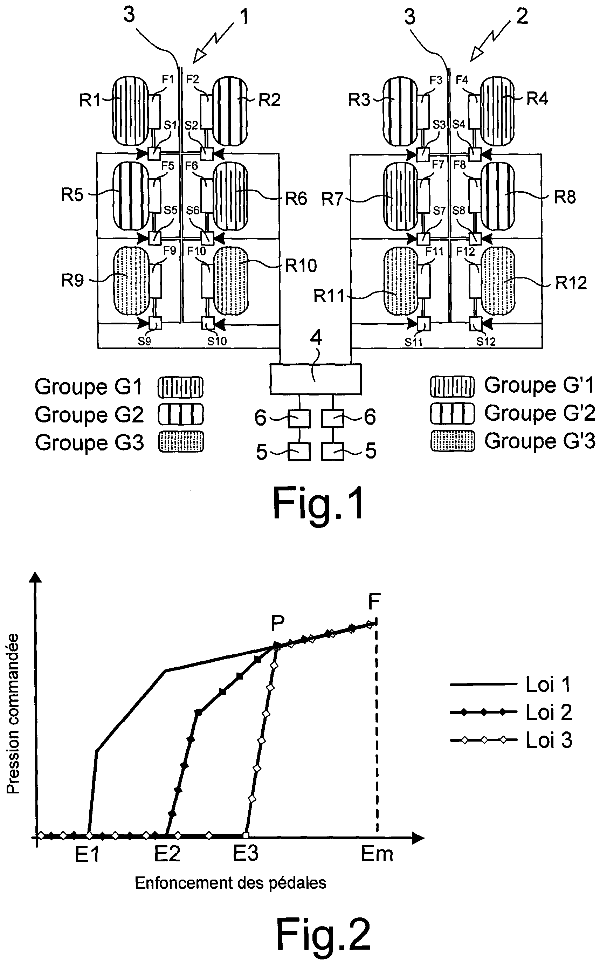

En référence à la figure 1, le procédé de gestion du freinage de l'invention est ici mis en oeuvre dans un aéronef comportant un train de douze roues portées par deux atterrisseurs principaux 1, 2. Les roues du premier atterrisseur principal 1 sont référencées R1, R2, R5, R6, R9, R10 et celles du deuxième atterrisseur principal 2 sont référencées R3, R4, R7, R8, R11, R12.

Chaque roue R1, ..., R12 est équipée d'un frein F1, ..., F12 électro-hydraulique qui est actionné par une servovalve hydraulique associée S1, ..., S12. Chaque servovalve est alimentée en fluide par un circuit hydraulique 3 et est commandée électriquement par des moyens de commande 4. La commande des servovalves est effectuée en fonction de l'enfoncement de pédales 5 de freins (ici au nombre de deux). Pour cela, les pédales 5 de freins sont chacune associées à un capteur d'enfoncement 6, qui transforme l'angle d'inclinaison de la pédale 5, c'est-à-dire le niveau d'enfoncement de celle-ci, en un signal électrique représentatif de cet enfoncement. Les moyens de commande 4, qui sont connectés électriquement aux capteurs d'enfoncement 6, sont adaptés à interpréter les signaux électriques fournis par les capteurs d'enfoncement 6, et à commander les servovalves S1, ..., S12 en fonction des angles d'inclinaison des pédales. Ainsi, la pression commandée et donc l'effort de freinage généré par les freins sont fonction de l'enfoncement des pédales de frein.

Lorsque l'aéronef roule à basse vitesse, c'est à dire en dessous d'un seuil de vitesse prédéterminé (par exemple 70 ou 80 km/h), les moyens de commande 4 activent le procédé de gestion du freinage de l'aéronef, qui comprend les étapes de :
- répartir les roues des atterrisseurs 1, 2 en trois groupes distincts pour chaque atterrisseur 1, 2, les groupes étant référencés ici G1, G2, G3 pour le premier atterrisseur 1, et G'1, G'2, G'3 pour le deuxième atterrisseur 2,
- affecter à chaque groupe de roues des lois L1, L2, L2 respectives de variation de l'effort de freinage en fonction de l'enfoncement des pédales de frein.

Ainsi, à un moment d'initialisation M0, qui correspond par exemple à une mise sous tension des moyens de commande 4 lors de laquelle les freins des roues sont dans un état nominal, c'est-à-dire lorsque les freins sont fonctionnels et présentent des températures et usures relativement proches, les roues de chaque atterrisseur sont réparties dans les groupes selon la répartition suivante :
- le groupe G1 du premier atterrisseur contient les roues R1, R6, le groupe G2 les roues R2, R5, le groupe G3 les roues R9, R10 ;
- le groupe G1' du deuxième atterrisseur contient les roues R3, R8, le groupe G2' les roues R4, R7, le groupe G3' les roues R11, R12.

Au moment M0, la loi L1 est affectée aux groupes G1, G1', la loi L2 au groupes G2, G2', la loi L3 aux groupes G3, G3'.

On note que pour homogénéiser le freinage, il est intéressant d'affecter les roues centrales R5, R6, et R7, R8 des atterrisseurs 1, 2 à des groupes distincts. En effet, les roues centrales sont souvent moins chargées que les roues avant et arrière, et donc sont susceptible de déraper à des niveaux d'effort de freinage commandés plus bas.

On note aussi que les groupes définissent une répartition symétrique au regard d'un plan longitudinal médian de l'aéronef et au regard d'un axe de chaque atterrisseur (chaque groupe de roue produit une traînée symétrique par rapport à ce plan et à cet axe), ce qui est favorable au maintien d'une bonne dirigeabilité et à une réduction des efforts de torsion appliqués aux atterrisseurs.

On note enfin que, bien que semblables, les lois L1 L2, L3, sont appliquées aux groupes G1, G2, G3 et G'1, G'2, G'3 des deux atterrisseurs 1, 2 de manière indépendante. On s'attachera donc uniquement, dans la suite de cette description, à la mise en oeuvre du procédé de gestion du freinage de l'invention sur les roues R1, R2, R5, R6, R9, R10 du premier atterrisseur 1 et aux groupes G1, G2, G3 auxquels elles sont affectées, l'ensemble de ce qui suit pouvant être appliqué de manière identique aux roues du deuxième atterrisseur 2 et aux groupes G'1, G'2, G'3 auxquels elles sont affectées.

Les lois L1, L2, L3, visibles à la figure 2, sont des fonctions F1, F2, F3 continûment croissantes, qui définissent des pressions commandées, et donc des efforts de freinage à partir de seuils minimums distincts E1, E2, E3 d'enfoncement des pédales, E1 étant inférieur à E2 qui est lui-même inférieur à E3. Un effort de freinage est donc généré à partir du moment où les pédales de freins sont enfoncées d'un enfoncement supérieur ou égal au seuil de la loi affectée. Le seuil E1 est relativement faible mais non nul, par exemple de l'ordre de 15%. La fonction F1 demeure supérieure à la fonction F2 qui elle-même demeure supérieure à la fonction F3 jusqu'à ce que les trois fonctions se rejoignent en un point P, à partir duquel les fonctions demeurent égales jusqu'à un point F correspondant à un enfoncement Em maximal des pédales.

L'utilisation, pour réaliser un freinage à basse vitesse, d'un nombre de freins croissant en fonction de l'enfoncement des pédales (quatre jusqu'à E2, puis huit jusqu'à E3, et douze ensuite) permet d'assurer un freinage progressif, précis, et donc confortable. Les freins commandés selon les lois L1 et L2, soit quatre freins sur six, doivent générer un effort de freinage égal à l'effort qui serait normalement généré par six freins. Ainsi, chacun de ces freins génère un effort de freinage relativement important lorsqu'il est utilisé.

Le procédé de gestion de l'invention comporte de plus l'étape de permuter à intervalles prédéterminés l'affectation des lois aux groupes selon une loi de permutation prédéterminée.

Au moment M0, la loi de permutation utilisée consiste à alterner automatiquement l'affectation des lois aux groupes à chaque interruption de freinage, c'est-à-dire chaque fois que les pédales sont relâchées à partir d'un enfoncement inférieur à une valeur basse prédéterminée, de manière à ce que chaque groupe de freins soit commandé successivement selon une loi différente. Ainsi, un intervalle prédéterminé correspond ici à une durée entre deux interruptions de freinage. Les lois L1, L2, L3 sont donc par exemple affectées respectivement aux groupes G3, G1, G2 après une première interruption de freinage, aux groupes G2, G3, G1 après une deuxième interruption de freinage, et à nouveau aux groupes G1, G2, G3 après une troisième interruption de freinage.

Le procédé de gestion de l'invention comporte en outre l'étape de modifier la loi de permutation en réponse à la survenue d'un évènement prédéterminé, ici la détection sur une roue dite roue singulière :
- de l'indisponibilité du frein de la roue singulière, ou
- d'une température du frein de la roue singulière particulièrement élevée ou basse par rapport aux températures d'autres freins, ou
- d'une usure du frein de la roue singulière particulièrement importante ou faible par rapport aux usures d'autres freins.

Dans le cas où l'indisponibilité du frein de la roue singulière est détectée, on modifie la loi de permutation en mettant en oeuvre une nouvelle loi de permutation selon laquelle la loi L3 est affectée de manière permanente au groupe comprenant la roue singulière, sans que cette affectation ne soit permutée, et dans laquelle on affecte les lois L1 et L2 aux deux autres groupes en permutant cette affectation à chaque interruption de freinage. Comme la loi L3 présente le seuil minimum E3 d'enfoncement des pédales le plus élevé à partir duquel un effort de freinage est censé être généré, la loi L3 est celle qui sollicite le moins les freins : l'impact de l'indisponibilité du frein de la roue singulière sur l'efficacité du freinage est donc minimisé.

Par exemple, lorsque l'indisponibilité du frein F10 de la roue R10 est détectée, on affecte la loi L3 au groupe G3 de manière permanente (jusqu'à ce que le frein F10 soit à nouveau disponible), et on continue à permuter l'affectation des lois L1 et L2 aux groupes G1 et G2 à chaque interruption de freinage.

Dans le cas où la température du frein de la roue singulière est particulièrement élevée par rapport aux températures d'autres freins (par exemple lorsque la température du frein de la roue singulière devient supérieure à 500°C alors que les températures des freins des autres roues restent dans des gammes de températures nominales), on modifie la loi de permutation en mettant en oeuvre une nouvelle loi de permutation selon laquelle la loi L3 est affectée pendant un certain nombre d'intervalles prédéterminés au groupe comprenant la roue singulière. Pendant cette durée, on continue à permuter l'affectation des lois L1 et L2 entre les deux autres groupes. Comme la loi L3 est celle qui sollicite le moins les freins, la température du frein de la roue singulière augmentera moins que celle des freins des roues des autres groupes pendant le freinage et va donc se rapprocher de la température des autre freins. On réalisera la même modification de la loi de permutation dans le cas où l'usure d'un frein est particulièrement importante par rapport aux usures d'autres freins.

Inversement, dans le cas où la température du frein de la roue singulière est particulièrement basse par rapport aux températures d'autres freins, c'est-à-dire que la température du frein de la roue singulière est inférieure à celle des autres roues et que la différence est supérieure à un seuil prédéterminé (par exemple 40°C), on modifie la loi de permutation en mettant en oeuvre une nouvelle loi de permutation selon laquelle la loi L1 est affectée pendant un certain nombre d'intervalles prédéterminés au groupe comprenant la roue singulière. Pendant cette durée, on continue à permuter l'affectation des lois L2 et L3 entre les deux autres groupes. Comme la loi L1 est celle qui sollicite le plus les freins, la température du frein de la roue singulière augmentera plus que celle des freins des roues des autres groupes pendant le freinage, et va donc se rapprocher de la température des autre freins. On réalisera la même modification de la loi de permutation dans le cas où l'usure d'un frein est particulièrement faible par rapport aux usures d'autres freins.

Par exemple, lorsque l'on détecte que le frein F10 de la roue R10 a une température inférieure de plus de 40°C à celle des températures des autres freins, on affecte la loi L1 au groupe G3 pendant un certain nombre d'intervalles (jusqu'à ce que la différence de température entre le frein F10 et les autres freins repasse au dessus d'un seuil prédéterminé), et on continue à permuter l'affectation des lois L2 et L3 aux groupes G1 et G2 à chaque interruption de freinage pendant la durée correspondant au certain nombre d'intervalles prédéterminés. A la suite de ce certain nombre d'intervalles prédéterminé, on revient à la loi de permutation telle que définie à M0.

On réalisera la même modification de la loi de permutation dans le cas où l'usure d'un frein est particulièrement faible par rapport aux usures d'autres freins.

L'invention n'est pas limitée au mode de réalisation particulier qui vient d'être décrit, mais, bien au contraire, couvre toute variante entrant dans le cadre de l'invention tel que défini par les revendications.

Bien que l'on ait illustré l'invention en utilisant des roues munies de freins électro-hydrauliques, il est bien sûr possible d'appliquer l'invention à des freins électromécaniques. Les lois L1, L2 et L3 utilisées seront alors bien sûr adaptées, mais elles définissent toujours des variations d'effort de freinage continument croissantes en réponse à un enfoncement de pédales de frein, et des seuils minimums différents d'enfoncement des pédales de frein à partir desquels un effort de freinage est généré.

Bien que l'on ait utilisé un train de roues comprenant douze roues montées sur deux atterrisseurs principaux et réparties en trois groupes, le procédé de gestion du freinage de l'invention peut être mis en oeuvre sur un aéronef comportant un nombre de roues différent réparties dans un nombre de groupes différent.

Bien que l'on ait proposé une certaine répartition initiale de roues en groupes, cette répartition initiale aurait bien sûr pu être différente. Pour le premier atterrisseur, un premier groupe aurait ainsi pu être composé des roues R1, R5, R9, et un deuxième groupe des roues R2, R6, R10. On aurait aussi pu former des groupes avec des roues d'atterrisseurs différents. Un premier groupe aurait ainsi pu être composé des roues R1, R2, R7, R8, et un deuxième groupe des roues R3, R4, R5, R6.

Les lois L1, L2, L3 ne sont fournies qu'à titre d'illustration, et peuvent bien sûr être définies différemment (le document FR2701006, notamment, présente des lois différentes).

On pourrait prévoir de modifier la loi de permutation en réponse à la survenue d'évènements différents, par exemple la détection d'une pression d'un pneumatique d'une roue particulièrement élevée ou faible, ou d'une température du pneumatique particulièrement élevée ou faible, par rapport aux pressions ou températures d'autres roues.

Bien que l'on ait indiqué qu'un intervalle prédéterminé correspond à une durée entre deux interruptions de freinage, un intervalle prédéterminé peut parfaitement correspondre à une durée fixe (quelques secondes, vingt-quatre heures, etc.), ou bien à une durée entre deux évènements différents (durée entre deux phases de freinage, etc.).

## Revendications

1. Procédé de gestion du freinage d'un aéronef comportant une pluralité de roues (R1, ..., R12) équipées chacune d'un frein (F1, ..., F12) adapté à générer un effort de freinage en réponse à un enfoncement de pédales (5) de frein, le procédé de gestion comprenant les étapes de :
- répartir les roues équipées d'un frein en au moins deux groupes distincts (G1, G2, G3, G'1, G'2, G'3) ;
- affecter à chaque groupe de roues des lois de freinage (L1, L2, L3) respectives de variation de l'effort de freinage en fonction de l'enfoncement des pédales de frein ;
- permuter à intervalles prédéterminés l'affectation des lois aux groupes selon une loi de permutation prédéfinie ;
**caractérisé en ce que** le procédé comporte en outre l'étape de modifier la loi de permutation en réponse à la survenue d'un évènement prédéterminé.

2. Procédé de gestion du freinage selon la revendication 1, dans lequel l'évènement prédéterminé est la détection sur au moins une roue (R1, ..., R12):
- de l'indisponibilité du frein (F1, ..., F12) de la roue, ou
- d'une température du frein particulièrement élevée ou basse par rapport aux températures d'autres freins, ou
- d'une usure du frein particulièrement importante ou faible par rapport aux usures d'autres freins, ou
- d'une température d'un pneumatique particulièrement élevée ou basse par rapport aux températures d'autres pneumatiques, ou
- d'une pression du pneumatique particulièrement élevée ou basse par rapport aux pressions d'autres pneumatiques.

3. Procédé de gestion du freinage selon la revendication 2, dans lequel chaque loi de freinage (L1, L2, L3) définit un seuil minimum (E1, E2, E3) respectif d'enfoncement des pédales (5) de frein à partir duquel un effort de freinage est généré, et dans lequel la modification de la loi de permutation consiste à mettre en oeuvre une nouvelle loi de permutation dans laquelle la loi de freinage (L3) qui définit le seuil minimum d'enfoncement le plus élevé est affectée à un groupe dont l'une des roues a son frein indisponible, et dans laquelle l'affectation de ce groupe n'est plus permutée.

4. Procédé de gestion du freinage selon la revendication 2, dans lequel chaque loi de freinage (L1, L2, L3) définit un seuil minimum (E1, E2, E3) respectif d'enfoncement des pédales (5) de frein à partir duquel un effort de freinage est généré, et dans lequel la modification de la loi de permutation consiste à mettre en oeuvre une nouvelle loi de permutation dans laquelle la loi de freinage (L3) qui définit le seuil minimum d'enfoncement le plus élevé est affectée pendant plusieurs intervalles prédéterminés au groupe d'une roue sur laquelle on a détecté :
- une température du frein particulièrement élevée par rapport aux températures d'autres freins, ou
- une usure du frein particulièrement importante par rapport aux usures d'autres freins, ou
- une température d'un pneumatique particulièrement élevée par rapport aux températures d'autres pneumatiques, ou
- une pression du pneumatique particulièrement élevée par rapport aux pressions d'autres pneumatiques.

5. Procédé de gestion du freinage selon la revendication 2, dans lequel chaque loi de freinage (L1, L2, L3) définit un seuil minimum (E1, E2, E3) respectif d'enfoncement des pédales (5) de frein à partir duquel un effort de freinage est généré, la modification de la loi de permutation consiste à mettre en oeuvre une nouvelle loi de permutation dans laquelle la loi de freinage (L1) qui définit le seuil minimum d'enfoncement le plus faible est affectée pendant plusieurs intervalles prédéterminés au groupe d'une roue sur laquelle on a détecté :
- une température du frein particulièrement basse par rapport aux températures d'autres freins, ou
- une usure du frein particulièrement faible par rapport aux usures d'autres freins, ou
- une température d'un pneumatique particulièrement basse par rapport aux températures d'autres pneumatiques, ou
- une pression du pneumatique particulièrement basse par rapport aux pressions d'autres pneumatiques.

6. Procédé de gestion du freinage selon l'une des revendications précédentes, dans lequel un intervalle prédéterminé est une durée entre deux relâchements de pédales (5) de frein.

## Patentansprüche

1. Verfahren zum Steuern der Bremsung eines Luftfahrzeugs, das eine Vielzahl von Rädern (R1, ..., R12) umfasst, die jeweils mit einer Bremse (F1, ..., F12) ausgestattet sind, die geeignet ist, eine Bremskraft in Antwort auf ein Drücken von Bremspedalen (5) zu erzeugen, wobei das Steuerverfahren die Schritte umfasst:
- Aufteilen der Räder, die mit einer Bremse ausgestattet sind, in mindestens zwei verschiedene Gruppen (G1, G2, G3, G'1, G'2, G'3);
- Zuweisen von jeweiligen Bremsgesetzen (L1, L2, L3) zur Veränderung der Bremskraft in Abhängigkeit des Drückens der Bremspedale zu jeder Rädergruppe,
- Permutieren der Zuweisung der Gesetze zu den Gruppen gemäß einem vordefinierten Permutationsgesetz in vorgegebenen Abständen; **dadurch gekennzeichnet, dass** das Verfahren ferner den Schritt des Änderns des Permutationsgesetzes in Antwort auf das Auftreten eines vorgegebenen Ereignisses umfasst.

2. Verfahren zum Steuern der Bremsung nach Anspruch 1, bei dem das vorgegebene Ereignis darin besteht, dass an mindestens einem Rad (R1, ..., R12) erfasst wird:
- die Nichtverfügbarkeit der Bremse (F1, ..., F12) des Rades, oder
- eine besonders hohe oder niedrige Temperatur der Bremse im Vergleich zu den Temperaturen der anderen Bremsen, oder
- eine besonders starke oder geringe Abnutzung der Bremse im Vergleich zu den Abnutzungen der anderen Bremsen, oder
- eine besonders hohe oder niedrige Temperatur eines Reifens im Vergleich zu den Temperaturen der anderen Reifen, oder
- ein besonders hoher oder niedriger Druck des Reifens im Vergleich zu den Drücken der anderen Reifen.

3. Verfahren zum Steuern der Bremsung nach Anspruch 2, bei dem jedes Bremsgesetz (L1, L2, L3) einen jeweiligen Mindestschwellenwert (E1, E2, E3) des Drückens der Bremspedale (5) definiert, anhand dessen eine Bremskraft erzeugt wird, und bei dem die Änderung des Permutationsgesetzes darin besteht, dass ein neues Permutationsgesetz angewandt wird, bei dem das Bremsgesetz (L3), das den höchsten Mindestschwellenwert des Drückens definiert, einer Gruppe zugewiesen wird, von der eines der Räder seine Bremse nicht zur Verfügung hat, und bei dem die Zuweisung zu dieser Gruppe nicht mehr permutiert wird.

4. Verfahren zum Steuern der Bremsung nach Anspruch 2, bei dem jedes Bremsgesetz (L1, L2, L3) einen jeweiligen Mindestschwellenwert (E1, E2, E3) des Drückens der Bremspedale (5) definiert, anhand dessen eine Bremskraft erzeugt wird, und bei dem die Änderung des Permutationsgesetzes darin besteht, dass ein neues Permutationsgesetz angewandt wird, bei dem das Bremsgesetz (L3), das den höchsten Mindestschwellenwert des Drückens definiert, über mehrere vorgegebene Zeitintervalle der Gruppe eines Rades zugewiesen wird, bei dem man erfasst hat:
- eine besonders hohe Temperatur der Bremse im Vergleich zu den Temperaturen der anderen Bremsen, oder
- eine besonders starke Abnutzung der Bremse im Vergleich zu den Abnutzungen der anderen Bremsen, oder
- eine besonders hohe Temperatur eines Reifens im Vergleich zu den Temperaturen der anderen Reifen, oder
- einen besonders hohen Druck des Reifens im Vergleich zu den Drücken der anderen Reifen.

5. Verfahren zum Steuern der Bremsung nach Anspruch 2, bei dem jedes Bremsgesetz (L1, L2, L3) einen jeweiligen Mindestschwellenwert (E1, E2, E3) des Drückens der Bremspedale (5) definiert, anhand dessen eine Bremskraft erzeugt wird, wobei die Änderung des Permutationsgesetzes darin besteht, dass ein neues Permutationsgesetz angewandt wird, bei dem das Bremsgesetz (L1), das den niedrigsten Mindestschwellenwert des Drückens definiert, über mehrere vorgegebene Zeitintervalle der Gruppe eines Rades zugewiesen wird, an dem man erfasst hat:
- eine besonders niedrige Temperatur der Bremse im Vergleich zu den Temperaturen der anderen Bremsen, oder
- eine besonders geringe Abnutzung der Bremse im Vergleich zu den Abnutzungen der anderen Bremsen, oder
- eine besonders niedrige Temperatur eines Reifens im Vergleich zu den Temperaturen der anderen Reifen, oder
- einen besonders niedrigen Druck des Reifens im Vergleich zu den Drücken der anderen Reifen.

6. Verfahren zum Steuern der Bremsung nach einem der vorhergehenden Ansprüche, bei dem ein vorgegebenes Zeitintervall eine Dauer zwischen zwei Freigaben der Bremspedale (5) ist.

## Claims

1. A method of managing the braking of an aircraft, the aircraft having a plurality of wheels (R1, ..., R12), each fitted with a brake (F1, ..., F12) adapted to generate a braking force in response to brake pedals (5) being depressed, the management method comprising the steps of:
• distributing the wheels fitted with respective brakes in at least two distinct groups (G1, G2, G3, G'1, G'2, G'3);
• allocating respective braking relationships (L1, L2, L3) to each of the groups of wheels for determining how braking force varies as a function of the depression of the brake pedals; and
• acting at predetermined intervals to permutate the allocation of the relationships to the groups in application of a predefined permutation relationship;
the method being **characterized in that** it further comprises the step of modifying the permutation relationship in response to the occurrence of a predetermined event.

2. A braking management method according to claim 1, wherein the predetermined event is detecting on at least one wheel (R1, ..., R12) :
• the unavailability of the brake (F1, ..., F12) of the wheel; or
• a temperature of the brake that is particularly high or particularly low compared with the temperatures of the other brakes; or
• wear of the brake that is particularly great or particularly small compared with the wear of the other brakes; or
• a temperature of a tire that is particularly high or particularly low compared with the temperatures of other tires; or
• a pressure of the tire that is particularly high or particularly low compared with the pressures of other tires.

3. A braking management method according to claim 2, wherein each braking relationship (L1, L2, L3) defines a respective minimum threshold (E1, E2, E3) for depression of the brake pedals (5) from which a braking force is generated, and wherein the modification to the permutation relationship consists in using a new permutation relationship in which the braking relationship (L3) that defines the highest minimum depression threshold is allocated to a group in which one of the wheels has its brake unavailable, and in which the allocation for this group is no longer permutated.

4. A braking management method according to claim 2, wherein each braking relationship (L1, L2, L3) defines a respective minimum threshold (E1, E2, E3) for depression of the brake pedals (5) from which a braking force is generated, and wherein the modification to the permutation relationship consists in using a new permutation relationship in which the braking relationship (L3) that defines the highest minimum depression threshold is allocated for a plurality of predetermined intervals to a group including a wheel on which there has been detected:
• a temperature of the brake that is particularly high compared with the temperatures of the other brakes; or
• wear of the brake that is particularly great compared with the wear of the other brakes; or
• a temperature of a tire that is particularly high compared with the temperatures of other tires; or
• a pressure of the tire that is particularly high compared with the pressures of other tires.

5. A braking management method according to claim 2, wherein each braking relationship (L1, L2, L3) defines a respective minimum threshold (E1, E2, E3) for depression of the brake pedals (5) from which a braking force is generated, and wherein the modification to the permutation relationship consists in using a new permutation relationship in which the braking relationship (L1) that defines the lowest minimum depression threshold is allocated for a plurality of predetermined intervals to a group including a wheel on which there has been detected:
• a temperature of the brake that is particularly low compared with the temperatures of the other brakes; or
• wear of the brake that is particularly small compared with the wear of the other brakes; or
• a temperature of a tire that is particularly low compared with the temperatures of other tires; or
• a pressure of the tire that is particularly low compared with the pressures of other tires.

6. A braking management method according to any preceding claim, wherein a predetermined interval is a duration between two occasions on which brake pedals (5) are released.
